# EUROPÄISCHE PATENTSCHRIFT

(11) **EP 1 569 312 B1**
(45) Veröffentlichungstag und Bekanntmachung des Hinweises auf die Patenterteilung: **21.12.2011**
(21) Anmeldenummer: 05450013.7
(22) Anmeldetag: 27.01.2005
(51) Int. Cl.: H02G 3/04

(54) **Bauelement zur Herstellung eines Kabelkanals**
Construction element for a cable channel
Element de construction pour une canalisation de cables

(30) Priorität: 26.02.2004 AT 3022004
(43) Veröffentlichungstag der Anmeldung: 31.08.2005
(73) Patentinhaber: Candussi, Helmut, 9300 St.Veit/Glan (AT)
(72) Erfinder: Candussi, Helmut, 9300 St.Veit/Glan (AT)
(74) Vertreter: Atzwanger, Richard

(56) Entgegenhaltungen:
- CH-A- 484 390

## Beschreibung

Die gegenständliche Erfindung betrifft einen Bausatz von Bauelementen zur Herstellung von abgewinkelt verlaufenden Kabelkanälen, wobei die Bauelemente durch Kabeltröge gebildet sind, welche mit einer Bodenplatte und mit zwei von dieser angenähert im rechten Winkel abragenden Seitenwänden ausgebildet sind, welchen eine Deckplatte zugeordnet ist, welche in Draufsicht deshalb trapezförmig ausgebildet sind, da die quer zur deren Längsachsen liegenden Stirnflächen mit den Normalflächen auf die Längsachsen spitze Winkel einschließen und welche aus in eine Form gegossenem Beton hergestellt sind.

Es ist bekannt, derartige Kabeltröge in Draufsicht rechteckig auszubilden. Zur Herstellung eines Kabelkanals werden solche Kabeltröge mit ihren quer zu deren Längsachse liegenden Stirnflächen aneinander versetzt. Soferne der Kabelkanal einen abgewinkelten Verlauf aufweisen soll, z.B. damit er um ein Hindernis herumgeführt werden kann, besteht das Erfordernis, mindestens einen der beiden aneinander liegenden Kabeltröge so zu bearbeiten, dass dessen eine Stirnseite mit der Längsachse einen gegenüber dem rechten Winkel verkleinerten Winkel aufweist.

Obgleich es mittels derartiger Kabeltröge möglich ist, geradlinige und abgewinkelt verlaufende Kabelkanäle herzustellen, entsprechen solche Kabeltröge deshalb nicht den an sie gestellten Forderungen, da sie zusätzlich bearbeitet werden müssen, wobei diese Bearbeitungen in der Regel an der Baustelle vorgenommen werden.

Aus der DE-U-1788470 ist weiters ein Kabeltrog bekannt, bei welchem dessen beiden Stirnflächen mit den Normalebenen auf die Längsachse einen Winkel von etwa 4° einschließen. Mit derartigen Kabeltrögen können entweder gerade oder gering gekrümmte Kabelkanäle hergestellt werden.
Aus der GB 2223629A sind gleichfalls Kabeltröge bekannt, mittels welcher Kabelkanäle mit einer vorgegebenen Krümmung hergestellt werden können.

Der gegenständlichen Erfindung liegt demgegenüber die Aufgabe zugrunde, einen Bausatz von Kabeltrögen zu schaffen, durch welchen Kabelkanäle mit einer sehr großen Anzahl von unterschiedlichen Abwinkelungen, Krümmungen u.dgl. hergestellt werden können. Dies wird erfindungsgemäß dadurch erzielt, dass der Bausatz mindestens zwei in Draufsicht unterschiedliche trapezförmige Kabeltröge enthält, bei welchen die quer zu den Längsachsen liegenden Stirnflächen mit den Normalflächen auf die Längsachsen unterschiedlich spitze Winkel einschließen, wobei diese Winkel vorzugsweise 45°, 22,5° bzw. 15°, betragen.
Vorzugsweise ist die Bodenplatte in den Bereichen der Stirnflächen mit Ausnehmungen ausgebildet, in welche eine Verriegelungsplatte einsetzbar ist. Dabei können die in der Bodenplatte vorgesehenen Ausnehmungen halbkreisförmig und die Verriegelungsplatte kreisförmig ausgebildet sein oder können die in der Bodenplatte vorgesehen Ausnehmungen polygonal und die Verriegelungsplatte gegengleich polygonal, insbesondere sechseckig oder achteckig, sein.

Weiters ist vorzugsweise die Verriegelungsplatte mit mindestens einer Durchbrechung ausgebildet, in welche ein Pfahlelement zu deren Verankerung im Boden einsetzbar ist. Nach einer anderen Ausführungsform ist die Verriegelungsplatte mit mindestens einem Pfahl zu deren Verankerung im Boden ausgebildet. Weiters können die oberen Stirnflächen der Seitenwände mit einem Absatz od.dgl. ausgebildet sein, welcher zur Lagesicherung der Deckplatte dient und können sie mit einer Nut zur Aufnahme eines Dichtungselementes ausgebildet sein.

Ein erfindungsgemäßer Bausatz enthält vorzugsweise Kabeltröge, bei denen die Stirnflächen mit den Normalebenen auf deren Längsachse Winkel von 15° einschließen, weiters Kabeltröge, bei denen die Stirnflächen mit den Normalebenen auf deren Längsachse Winkel von 22,5° einschließen und weiters solche Kabeltröge, bei welchen die Stirnflächen mit den Normalebenen auf deren Längsachse Winkel von 45° einschließen. Bei einem Aneinanderfügen von derart ausgebildeten Kabeltrögen kann sowohl ein geradlinig verlaufender Kabelkanal als auch ein abgewinkelt verlaufender Kabelkanal hergestellt werden. Um einen geradlinigen Kanal herzustellen, werden die aneinanderschließenden Kabeltröge jeweils in gegeneinander um 180° gewendeter Lage aneinander versetzt. Soferne ein abgewinkelter Kabelkanal hergestellt werden soll, werden die Kabeltröge in gegeneinander nicht gewendeter Lage aneinander versetzt.

Der Gegenstand der Erfindung ist nachstehend anhand von in der Zeichnung dargestellten Ausführungsbeispielen näher erläutert. Es zeigen:
- Fig.1: einen erfindungsgemäßen Kabeltrog, in auseinander gezogener, axo- nometrischer Darstellung;
- Fig.2: den Kabeltrog gemäß Fig.1, in Draufsicht;
- Fig.3: den Kabeltrog gemäß Fig.1, in Richtung des Pfeiles III der Fig.2 ge- sehen,
- Fig.4, 4a: mittels erfindungsgemäßer Kabeltröge hergestellte unterschiedlich verlaufende Kabelkanäle, jeweils in Draufsicht;
- Fig.5, 5a, 5b: drei Abschnitte von Kabelkanälen, welche aus unterschiedlich ausge- bildeten Kabeltrögen bestehen, jeweils in Draufsicht.

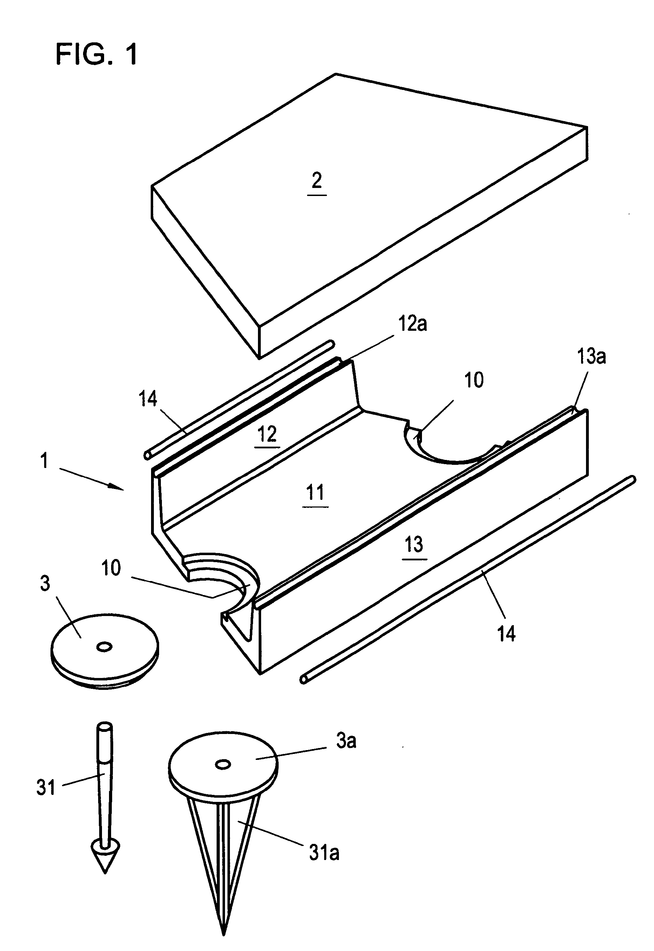

Der in Fig. 1 dargestellte Kabeltrog 1 weist eine Bodenplatte 11 und zwei von der Bodenplatte 11 angenähert im rechten Winkel nach oben abragende Seitenwände 12 und 13 auf. Die oberen Stirnflächen der Seitenwände 12 und 13 sind mit Nuten 12a und 13a ausgebildet, welche zur Aufnahme von Dichtungselementen 14 dienen. Weiters ist dem Kabeltrog 1 eine Deckplatte 2 zugeordnet.

Die Bodenplatte 11 ist im Bereich der seitlichen Stirnflächen des Kabeltroges 1 mit halbkreisförmigen Ausnehmungen 10 ausgebildet, welchen plattenförmige Befestigungselemente 3 und 3a zugeordnet sind, welche in die kreisförmigen Ausnehmungen zweier aneinander angefügter Kabeltröge 1 einsetzbar sind und welche mittels Pfählen 31 und 31a im Boden verankerbar sind. Durch diese Befestigungselemente werden aneinanderliegende Kabeltröge 1 in ihren gegenseitigen Lagen fixiert.

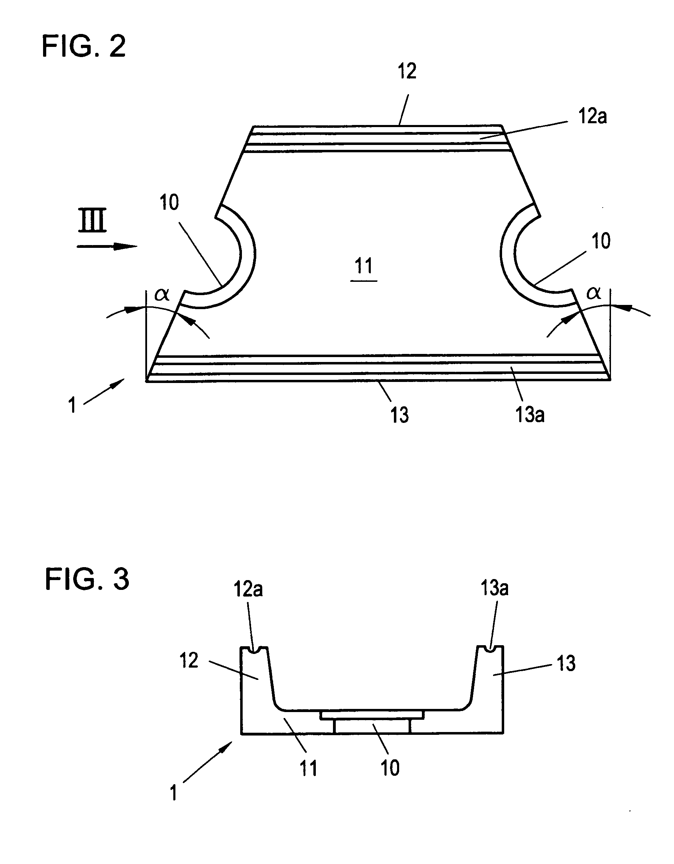

Wie dies aus Fig.2 ersichtlich ist, ist der Kabeltrog 1 in Draufsicht trapezförmig ausgebildet, wobei dessen zwei seitlichen Stirnflächen mit der Normalebene auf die Längsachse einen spitzen Winkel α einschließen. Der Winkel α beträgt vorzugsweise 15°, 22,5° oder 45°.

In Fig.3 ist der Kabeltrog gemäß Fig.2 in Stirnansicht dargestellt.

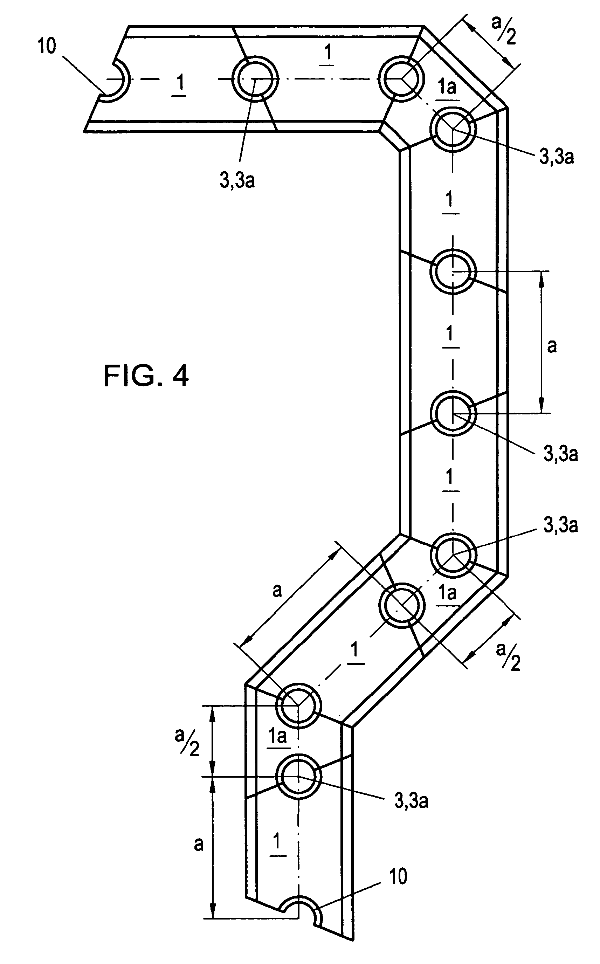

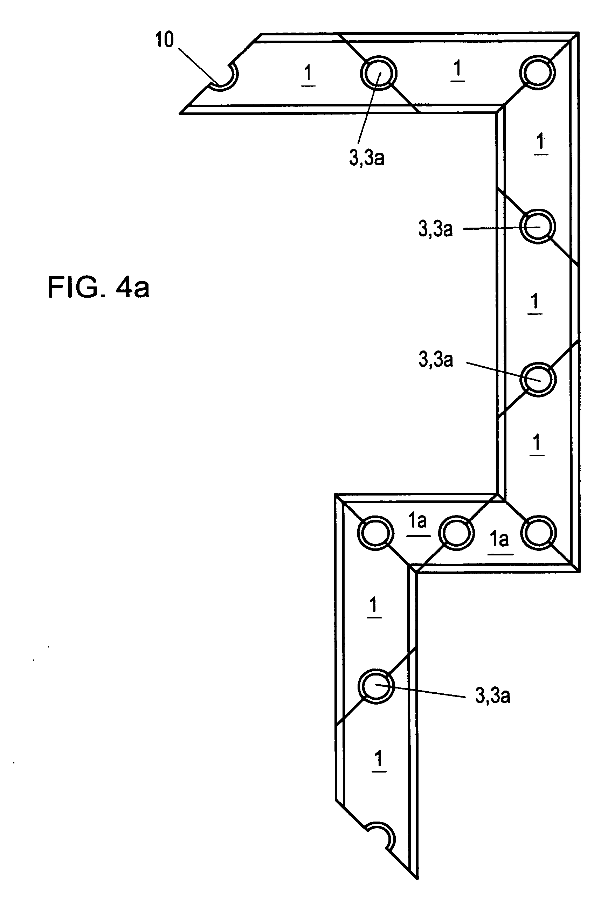

Wie dies in Fig.4 dargestellt ist, werden zur Herstellung eines Kabelkanals derartige Kabeltröge 1 mit ihren Stirnflächen aneinandergefügt. Soferne dabei ein geradliniger Verlauf des Kabelkanals erzielt werden soll, werden jeweils aneinanderschließende Kabeltröge 1 in einer gegeneinander um 180° gewendeten Lage aneinandergefügt. Soferne demgegenüber ein abgewinkelter Verlauf des Kabelkanals erzielt werden soll, werden die Kabeltröge 1 gegeneinander nicht um 180° gewendet, wodurch Abwinkelungen des Kabelkanals bewirkt werden. Dabei können Kabeltröge 1 verwendet werden, deren mittlere Länge den Wert a beträgt und können weiters solche Kabeltröge 1a verwendet werden, deren mittlere Länge den Wert a/2 beträgt.

Bei den in Fig.4 verwendeten Kabeltrögen 1 und 1a, deren Stirnflächen mit der Normalebene auf die Längsachse einen Winkel α von 22,5° einschließen, wird bei Aneinanderfügen von zwei Kabeltrögen 1,1a in gegeneinander um 180° gewendeter Lage ein geradliniger Abschnitt des Kabelkanals hergestellt, wogegen bei einem Aneinanderfügen in gegeneinander nicht um 180° gewendeten Lagen eine Abwinkelung des Kabelkanals um 45° bewirkt wird. Bei Aneinanderfügen von drei Kabeltrögen 1 bzw. 1a wird eine Abwinkelung des Kabelkanals um 90° bewirkt. Die aneinander gefügten Kabeltröge 1 bzw. 1a werden mittels in die Ausnehmungen 10 eingesetzter Platten 3, 3a welche mittels der Pfähle 31, 31a im Boden verankert sind, in ihrer gegenseitigen Lage verriegelt.

Wie dies in Fig.4a dargestellt ist, können für die Herstellung von Kabelkanälen auch solche Kabeltröge 1 bzw. 1a verwendet werden, bei welchen der Winkel α = 45° beträgt, wodurch bei Aneinanderfügen von zwei Kabeltrögen 1 bzw. 1a in nicht gewendeter Lage der Kabelkanal um 90° abgewinkelt wird. In analoger Weise kann der Winkel α auch mit 15° gewählt werden, wobei durch ein Aneinanderfügen von gegeneinander nicht gewendeten Kabeltrögen 1 und 1a Abschnitte von Kabelkanälen mit Abwinkelungen von 30°, von 60° und von 90° hergestellt werden können.

Soferne für die Herstellung eines Kabelkanals Kabeltröge 1 mit unterschiedlichen Winkeln α von 15°, 22,5° und 45° verwendet werden, sind vielfältige Verläufe von Kabelkanälen herstellbar, ohne dass es hiezu einer Bearbeitung der Kabeltröge 1 bzw. 1a zur Anpassung an die bestehenden örtlichen Gegebenheiten bedarf. Zudem können die Kabeltröge auch mit weiteren unterschiedlichen Längen hergestellt werden.

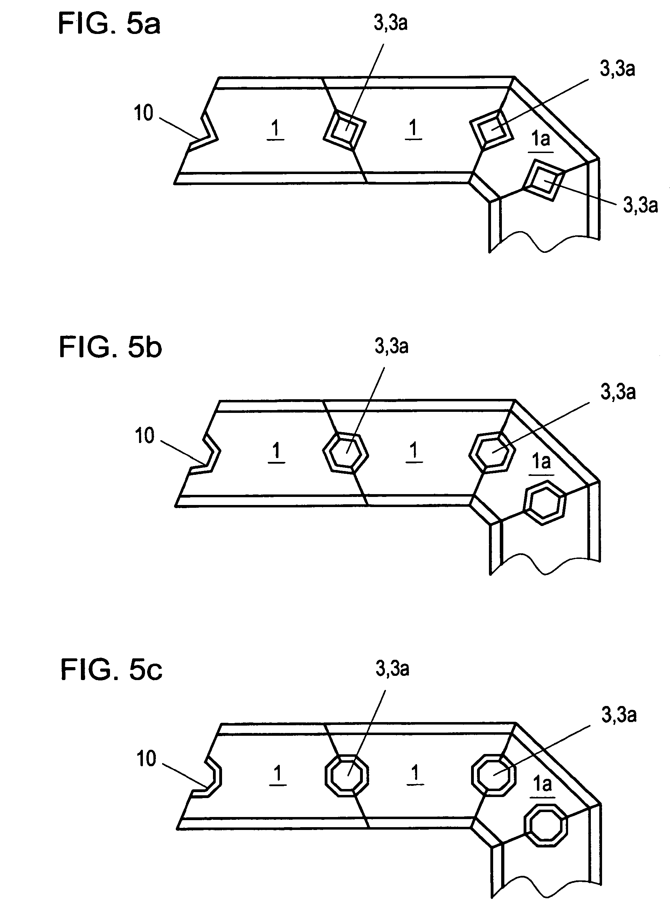

Wie dies in den Fig.5, 5a und 5b dargestellt ist, können die Ausnehmungen 10 und die Verriegelungsplatten 3, 3a anstelle einer Kreisform auch eine quadratische Form oder polygonale Formen aufweisen. Aufgrund dieser Formen sind die Verriegelungsplatten 3, 3a ungeachtet der gegenseitigen Lagen der aneinanderschließenden Kabeltröge 1 in die durch diese gebildeten, den Verriegelungsplatten 3, 3a gegengleichen Ausnehmungen einsetzbar.

Derartige Kabeltröge sind aus Beton hergestellt, wobei sie in Formen gegossen werden.

## Patentansprüche

1. Bausatz von Bauelementen zur Herstellung von abgewinkelt verlaufenden Kabelkanälen, wobei die Bauelemente durch Kabeltröge (1) gebildet sind, welche mit einer Bodenplatte (11) und mit zwei von dieser angenähert im rechten Winkel abragenden Seitenwänden (12, 13) ausgebildet sind, welchen eine Deckplatte (2) zugeordnet ist, welche in Draufsicht deshalb trapezförmig ausgebildet sind, da die quer zur deren Längsachsen liegenden Stirnflächen mit den Normalflächen auf die Längsachsen spitze Winkel einschließen und welche aus in eine Form gegossenem Beton hergestellt sind, **dadurch gekennzeichnet, dass** der Bausatz mindestens zwei in Draufsicht unterschiedliche trapezförmige Kabeltröge enthält, bei welchen die quer zu den Längsachsen liegenden Stirnflächen mit den Normalflächen auf die Längsachsen unterschiedlich spitze Winkel einschließen, wobei diese Winkel vorzugsweise 45°, 22,5° bzw. 15°, betragen.

2. Bausatz nach Patentanspruch 1, **dadurch gekennzeichnet, dass** die Bodenplatte (11) in den Bereichen der Stirnflächen mit Ausnehmungen (10) ausgebildet ist, in welche eine Verriegelungsplatte (3, 3a) einsetzbar ist.

3. Bausatz nach Patentanspruch 2, **dadurch gekennzeichnet, dass** die in der Bodenplatte (11) vorgesehenen Ausnehmungen (10) halbkreisförmig sind und dass die Verriegelungsplatte (3, 3a) kreisförmig ausgebildet ist.

4. Bausatz nach Patentanspruch 2, **dadurch gekennzeichnet, dass** die in der Bodenplatte (11) vorgesehen Ausnehmungen (10) polygonal sind und dass die Verriegelungsplatte (3, 3a) gegengleich polygonal, insbesondere sechseckig oder achteckig, ist.

5. Bausatz nach einem der Patentansprüche 2 bis 4, **dadurch gekennzeichnet, dass** die Verriegelungsplatte (3) mit mindestens einer Durchbrechung ausgebildet ist, in welche ein Pfahlelement (31) zu deren Verankerung im Boden einsetzbar ist.

6. Bausatz nach einem der Patentansprüche 2 bis 4, **dadurch gekennzeichnet, dass** die Verriegelungsplatte (3a) mit mindestens einem Pfahl (31a) zu deren Verankerung im Boden ausgebildet ist.

7. Bausatz nach einem der Patentansprüche 1 bis 6, **dadurch gekennzeichnet, dass** die oberen Stirnflächen der Seitenwände (12, 13) mit einem Absatz od.dgl. ausgebildet sind, welcher zur Lagesicherung der Deckplatte (2) dient.

8. Bausatz nach einem der Patentansprüche 1 bis 7, **dadurch gekennzeichnet, dass** die oberen Stirnflächen der Seitenwände (12, 13) mit einer Nut (12a, 13a) zur Aufnahme eines Dichtungselementes (14) ausgebildet sind.

## Claims

1. A kit of components for producing angled cable ducts, the components being formed by cable troughs (1) which are formed of a base plate (11) and of two side walls (12, 13) projecting approximately at right angles therefrom, a top plate (2) being associated with said side walls, which cable troughs are trapezoidal in plan view, because the end faces positioned transversely of the longitudinal axes thereof form acute angles with the faces normal to the longitudinal axes, and which are produced from concrete cast into a mould, **characterised in that** the kit contains at least two cable troughs of different trapezoidal shapes in plan view, the end faces positioned transversely of the longitudinal axes forming different acute angles with the faces normal to the longitudinal axes, these angles preferably amounting to 45°, 22.5° or 15°.

2. A kit according to claim 1, **characterised in that** the base plate (11) is provided in the regions of the end faces with recesses (10), into which a locking plate (3, 3a) may be inserted.

3. A kit according to claim 2, **characterised in that** the recesses (10) provided in the base plate (11) are semicircular and **in that** the locking plate (3, 3a) is of circular construction.

4. A kit according to claim 2, **characterised in that** the recesses (10) provided in the base plate (11) are polygonal and **in that** the locking plate (3, 3a) is complementarily polygonal, in particular hexagonal or octagonal.

5. A kit according to any one of claims 2 to 4, **characterised in that** the locking plate (3) is provided with at least one opening, into which a post element (31) may be inserted to anchor it in the base.

6. A kit according to any one of claims 2 to 4, **characterised in that** the locking plate (3a) is provided with at least one post (31a) for anchoring it in the base.

7. A kit according to any one of claims 1 to 6, **characterised in that** the upper end faces of the side walls (12, 13) are provided with a step or the like, which serves to secure the top plate (2) in place.

8. A kit according to any one of claims 1 to 7, **characterised in that** the upper end faces of the side walls (12, 13) are provided with a groove (12a, 13a) for accommodating a sealing element (14).

## Revendications

1. Jeu d'éléments de construction pour la fabrication de canalisations de câbles coudées, étant précisé que les éléments de construction sont formés par des gouttières de câbles (1) qui comportent une plaque de fond (11) et deux parois latérales (12, 13) partant de celle-ci à peu près à angle droit et auxquelles est associée une plaque de recouvrement (2) qui, vue de dessus, à une forme trapézoïdale étant donné que les surfaces frontales transversales par rapport aux axes longitudinaux forment avec les surfaces normales par rapport aux axes longitudinaux des angles aigus et qui sont fabriquées en béton coulé dans un moule, **caractérisé en ce que** le jeu contient au moins deux gouttières de câbles qui, vues de dessus, ont des formes trapézoïdales différentes et dont les surfaces frontales transversales par rapport aux axes longitudinaux forment avec les surfaces normales par rapport aux axes longitudinaux des angles aigus différents, ces angles étant de préférence de 45°, 22,5° ou 15°.

2. Jeu selon la revendication 1, **caractérisé en ce que** la plaque de fond (11) est pourvue, dans les zones des surfaces frontales, de creux (10) dans lesquels peut être insérée une plaque de verrouillage (3, 3a).

3. Jeu selon la revendication 2, **caractérisé en ce que** les creux (10) prévus dans la plaque de fond (11) sont semi-circulaires et **en ce que** la plaque de verrouillage (3, 3a) est circulaire.

4. Jeu selon la revendication 2, **caractérisé en ce que** les creux (10) prévus dans la plaque de fond (11) sont polygonaux et **en ce que** la plaque de verrouillage (3, 3a) a une forme polygonale correspondante, en particulier hexagonale ou octogonale.

5. Jeu selon l'une des revendications 2 à 4, **caractérisé en ce que** la plaque de verrouillage (3) est pourvue d'au moins une ouverture dans laquelle peut être inséré un élément d'enfichage correspondant (31) pour son ancrage dans le sol.

6. Jeu selon l'une des revendications 2 à 4, **caractérisé en ce que** la plaque de verrouillage (3a) est pourvue d'au moins une fiche (31a) pour son ancrage dans le sol.

7. Jeu selon l'une des revendications 1 à 6, **caractérisé en ce que** les surfaces frontales supérieures des parois latérales (12, 13) sont pourvues d'un épaulement ou d'un élément similaire qui sert à bloquer en place la plaque de recouvrement (2).

8. Jeu selon l'une des revendications 1 à 7, **caractérisé en ce que** les surfaces frontales supérieures des parois latérales (12, 13) sont pourvues d'une rainure (12a, 13a) pour recevoir un élément d'étanchéité (14).
